Europäisches Patentamt

European Patent Office

Office européen des brevets

(19)

(11) Veröffentlichungsnummer: **0 147 717**

**A2**

(12) # EUROPÄISCHE PATENTANMELDUNG

(21) Anmeldenummer: **84115134.3**

(22) Anmeldetag: **11.12.84**

(51) Int. Cl.⁴: **B 29 C 71/04**
//B29K105:02, B29K105:24,
B29K105:20

(30) Priorität: **22.12.83 DE 3346561**

(43) Veröffentlichungstag der Anmeldung:
**10.07.85 Patentblatt 85/28**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Bäuerlein, Rudolf, Dipl.-Phys.**
**Gossenstrasse 107**
**D-8520 Erlangen(DE)**

(72) Erfinder: **Giebel, Wolgang, Dipl.-Ing. (FH)**
**Mathildenstrasse 31a**
**D-8033 Planegg(DE)**

(72) Erfinder: **Meltsch, Hans-Jürgen, Ing. (grad.)**
**Odinstrasse 26**
**D-8034 Germering(DE)**

(54) **Formteile aus vernetztem Kunststoff mit Stützbereichen für Kraftaufnahmeelemente.**

(57) Bei der Erfindung handelt es sich um Formteile (1, 5) aus vernetztem Kunststoff mit Stützbereichen (4, 7) und um Verfahren zur Herstellung dieser Formteile, wobei gemäß der Erfindung die Formbeständigkeit der Stützbereiche und die Haftfestigkeit zwischen eventuell eingefügten Einlagen und dem umgebenden Kunststoff verbessert werden. Dies wird dadurch erreicht, daß der Vernetzungsgrad in den Stützbereichen bzw. in den Bereichen der Einlagen (4) höher ist als im übrigen vernetzten Bereich (3) dieser Formteile (1). Bei zylindrischen Formteilen (5) mit zylindrischen, beschichteten Einlagen (7) wird die Vernetzung im Bereich zwischen der Beschichtung (8) und dem äußeren, umgebenden Mantel (6) beispielsweise auch durch eine vernetzungsfördernde Schicht erreicht. Die Vernetzung in diesen kritischen Bereichen fördert die Formbeständigkeit und die Bindungskräfte. Auf diese Weise wird eine Verformung der Stützbereiche, die zum Beispiel für den Einsatz von Kraftaufnahmeelementen gedacht sind, und ein Ablösen der Einlagen (4, 7) vom Kunststoffmaterial verhindert.

FIG 1

- ∧-

Siemens Aktiengesellschaft
Berlin und München

Unser Zeichen
VPA 83 P 1 9 6 7 E

Formteile aus vernetztem Kunststoff mit Stützbereichen
für Kraftaufnahmeelemente.

Die Erfindung betrifft Formteile aus vernetztem Kunststoff
mit Stützbereichen für Kraftaufnahmeelemente.

Formteile dieser Art sind zum Beispiel aus der DE-OS
Nr. 19 25 739 bekannt. Dort handelt es sich um Formteile,
die aus einem ersten, vernetzten, unschmelzbaren Teil aus
Polymer-Material und einem zweiten, schmelzbaren, im wesentlichen unvernetzten Teil bestehen. Zwischen den beiden Teilen ist eine undurchlässige Sperrschicht eingelagert, durch welche verhindert wird, daß derjenige Teil des
Formteiles über dem sie liegt, vernetzt wird, wenn die
Vernetzung des Formteils durch Bestrahlung oder in anderer Weise vorgenommen wird. Diese Sperrschicht ist im
Polymer-Material eingebettet und trennt somit den zu vernetzenden Teil von dem nicht zu vernetzenden Teil, welcher
schmelzbar bleiben soll. Es wird also nur der der Vernetzungsquelle zugewandte Teil vernetzt, während der unter der Sperrschicht liegende Teil unvernetzt bleibt. In
dieser DE-OS 19 25 739 werden nun auch Verschlüsse von
rohrförmigen Formteilen beschrieben, bei denen die Längsränder derartige "Doppelschichten" mit dazwischenliegenden Sperrschichten aufweisen. Im geschlossenen Zustand
dieser Formteile berühren sich die schmelzbaren, unvernetzten Teile beider Längsränder und liegen zwischen den
beiden Sperrschichten aneinander. Während der Rückstellung der Formteile schmelzen diese beiden Schichten und
bilden die Abdichtung zwischen dem ersten Randbereich und

Sef 1 Phl /22.12.1983

dem zweiten Randbereich des Verschlusses. Bei dieser Art von Verschluß ist unter Umständen von Nachteil, daß die Herstellung dieser einzelnen Verschlußelemente recht kompliziert ist, wobei während des Schmelzvorgangs die Haftfähigkeit des unvernetzten schmelzbaren Materials nicht kontrollierbar ist. Die Formbeständigkeit und die Haftfähigkeit des Materials an der Einlage ist jedoch im Verschlußbereich besonders wichtig, da sich sonst Unregelmäßigkeiten einstellen können, die zu Undichtigkeiten führen. Es ist also zusätzlich das vernetzte, unschmelzbare Teil notwendig, welches als Stütze für das geschmolzene Teil dienen muß.

Für vorliegende Erfindung stellt sich nun die Aufgabe, Formteile mit Stützbereichen zu schaffen, bei denen die Formbeständigkeit und die Haftfähigkeit des Kunststoffmaterials besonders gut und zuverlässig ist, wobei eine besonders einfache Herstellung solcher Formteile gewährleistet sein soll.

Die gestellte Aufgabe wird durch die Erfindung mit einem Formteil der eingangs genannten Art dadurch erreicht, daß die Stützbereiche einen höheren Vernetzungsgrad aufweisen als die übrigen vernetzten Bereiche des Formteils.

Eine Lösung der gestellten Aufgabe geht insbesondere bei einem Formteil aus wärmeschrumpfbarem Kunststoff mit Einlagen in den Stützbereichen dahin, daß der Vernetzungsgrad des gesamten Kunststoffes im Bereich der Einlagen höher ist als im einlagenfreien Bereich des Formteils.

Eine weitere Lösung der gestellten Aufgabe für Formteile gemäß der Erfindung besteht auch darin, daß der Vernetzungsgrad in den Stützbereichen so groß gewählt ist, daß die Festigkeit für Kraftaufnahmeelemente gegeben ist.

Eine weitere Lösung der gestellten Aufgabe für insbesondere rohrförmige Formteile aus vernetztem Kunststoff mit Einlagen ist dadurch gegeben, daß bei rohrförmiger Ausgestaltung des Formteils im Stützbereich eine rohrförmige Einlage vorgesehen ist und daß der an der Einlage angrenzende Stützbereich einen höheren Vernetzungsgrad aufweist als die übrigen Bereiche.

Weiterhin werden Verfahren angegeben, nach denen die Formteile gemäß der Erfindung hergestellt werden können, wie Verfahren zum Vernetzen durch Bestrahlung oder durch chemische Reaktionsmittel.

Bei einem Ausführungsbeispiel gemäß der Erfindung sind nun die Bereiche, die für eine Kraftaufnahme in Frage kommen, das heißt die Stützbereiche, so stark vernetzt, daß die Festigkeit des Kunststoffes in diesen relevanten Bereichen für Kraftaufnahmeelemente ausreicht. Dies ist zum Beispiel bei Formteilen, die als Manschette für die Umhüllung von Gegenständen ausgebildet sind in den längsseitigen Randbereichen nötig, da diese miteinander verbunden werden müssen. Hierfür werden die Randbereiche zum Beispiel so ausgebildet, daß sie selbst bereits Verschlußelemente bilden. Auch ist der Einsatz von separaten Verschlußelementen in den Stützbereichen möglich. In diesen Fällen sind die Anforderungen bezüglich Haftfähigkeit und Formfestigkeit besonders hoch und werden durch die Erfindung mit höherem Vernetzungsgrad in den relevanten Stützbereichen erfüllt.

Bei vielen bekannten Anwendungen von versteifenden Einlagen in Kunststoffen besteht im allgemeinen die Schwierigkeit, die Haftung und Festigung zwischen den Einlagen und dem umgebenden Kunststoff herzustellen. Bei den Formteilen gemäß der Erfindung besteht nun der Vorteil besonders darin, daß diese Haftfähigkeit und Festigkeit in einfacher Weise durch Erhöhung des Vernetzungsgrades in diesen relevanten Stützbereichen hergestellt werden kann, wobei auch die hierfür nötigen Verfahren besonders einfach gehalten sind. Das Prinzip beruht auf einer Vernetzung, oder falls das Produkt schon vernetzt ist, auf einer Zusatzvernetzung in den relevanten Stützbereichen, das heißt in den Bereichen der versteifenden Einlagen. Dabei ist zu beachten, daß der Vernetzungsgrad im Bereich der Einlagen jeweils höher ist als im einlagenfreien Bereich der Formteile. So wird beispielsweise bei einem Verfahren mit Vernetzung durch energiereiche Bestrahlung das Formteil in den Stützbereichen der Einlagen von beiden Seiten her betrahlt, da die Einlagen gemäß der Erfindung ringsum vom vernetzten Kunststoff umgeben sein sollen. Durch die Vernetzung wird in diesem Stützbereich eine besondere Stabilität und Formbeständigkeit erreicht, wobei es besonders vorteilhaft ist, wenn die Einlagen bzw. Beschichtungen der Einlagen mit vernetzt werden. So bietet sich zum Beispiel an, als Einlage ein Metallband mit einer Beschichtung aus einem Haftvermittler, vorzugsweise Polyethylenacrylcopolimerisat (PEAC) zu versehen. Auch ist es möglich, im Rahmen der Erfindung eine Beschichtung zu wählen, die Vernetzungsbeschleuniger enthält, die vor dem Einlaufen am Extruder zum Beispiel durch ein Peroxidbad gezogen oder mit einer Peroxidpaste bestrichen worden ist. So springt dann während des Extrudiervorganges der Formteile das Peroxid an, so daß erhöhte Bindungskräfte zustandekommen. Verfahren dieser Art beruhen dann auf chemischer Vernetzung.

Die Einlagen in den Formteilen können gemäß der Erfindung aus Metall, aus mit Kunststoffbeschichtung versehenen Metallen, aus reiß- und wärmefesten Kunststoffen, aus Glasfaserelementen oder ähnlichem bestehen, wobei die Profilierung den jeweiligen Erfordernissen angepaßt wird. Sie können flach, zylindrisch, voll, hohl oder auch besonders profiliert ausgebildet werden.

Wird zum Beispiel bei den Verfahren zum Herstellen der Formteile gemäß der Erfindung die Vernetzung durch energiereiche Bestrahlung gewählt, so muß hier dafür gesorgt werden, daß gerade im Bereich der Einlagen eine Ringsumvernetzung stattfindet. Dies kann entweder durch beidseitiges Bestrahlen oder durch Reflexion der Strahlung an geeigneten Materialien, wie zum Beispiel an Blei, Wolfram oder Gold erreicht werden. Der erforderliche höhere Vernetzungsgrad gemäß der Erfindung in den Stützbereichen wird zum Beispiel durch ungleichmäßige Ablenkung der Bestrahlung erreicht und zwar so, daß die Bereiche mit höherem Vernetzungsgrad länger bestrahlt werden. Eine Erhöhung des Vernetzungsgrades kann jedoch auch durch mehrfaches Bestrahlen in diesen Bereichen erreicht werden. So ist zum Beispiel auch eine Vernetzung bzw. Nachvernetzung mit Hilfe von Mikrowellen-Energie möglich.

Eine weitere Möglichkeit zur Erhöhung des Vernetzungsgrades des Kunststoffes zwischen der Einlage und dem Formteil kann durch Einbringen einer vernetzungsfördernden Schicht erreicht werden. Derartige vernetzungsfördernde Schichten eignen sich besonders dann, wenn eine Vernetzung durch Bestrahlung weniger in Frage kommt. Bei der Herstellung von rohrförmigen Formteilen mit zylindrischen Einlagen, wie zum Beispiel eines Schichtenmantelkabels, bei dem die Haftung zwischen dem rohrförmig ausgebildeten Metallband und dem Kunststoffmantel verbessert werden soll, eignet sich am besten eine vernetzungsfördernde Schicht, die gemäß der Erfindung bei der Extrusion des Kabelmantels längseinlaufend mit eingebracht wird, so daß die Vernetzung bereits durch die Wärme bei der Extrusion des PE-Mantels angeregt wird. Gemäß der Erfindung ist es auch von Vorteil, eine vernetzungsfördernde Schicht als Beschichtung des Metallbandes auszubilden, bei der dann der Adhäsionsbindung eine Vernetzungsbindung überlagert ist. Diese Beschichtung besteht zum Beispiel aus einem PEAC, welches mit einem Peroxid behandelt ist. Derartige Verfahren sind auch bei ebenen Ausführungsbeispielen möglich, wobei die Extrusion und Vernetzung besonders einfach gehalten werden können.

Bei der Herstellung der Formteile gemäß der Erfindung können nun auch verschiedene Vernetzungsverfahren, insbesondere Bestrahlungsverfahren und chemische Verfahren, kombiniert werden. Dies ist vorteilhaft, wenn einzelne Vernetzungsschritte nicht gleichzeitig ablaufen bzw. angeregt werden sollen. So ist es möglich, Vernetzungsabläufe, zum Beispiel das "Höhervernetzen" bestimmter Bereiche, "vorzubereiten"; jedoch erst zu einem späteren Zeitpunkt anzuregen.

Weiterhin kann die Eröhung des Vernetzungsgrades für die relevanten Stützbereiche entweder kontinuierlich oder in Sprüngen vorgenommen werden. Diese Übergänge können somit den Erfordernissen entsprechend angepaßt werden.

Das Prinzip der Erfindung beruht auch darauf, im Bereich der Einlagen, die ja in den Stützbereichen angeordnet sind, eine höhere Vernetzung vorzusehen, die zu einer besseren Bindung zwischen dem Material der Einlage und dem Material des Formteils führt. Bei Formteilen mit Schrumpfeigenschaften, ist nun zu beachten, daß die Dehnfähigkeit mit zunehmender Vernetzung sinkt. Es ist also bei flächenhaften Formteilen mit formfesten Einlagen entlang der Längsränder zur Herstellung von Schrumpfmanschetten im Schrumpfbereich darauf zu achten, daß die Dehnfähigkeit besonders groß ist. Dies bedeutet jedoch, daß in diesen Beeichen nur eine geringe Vernetzung stattfinden darf, so daß die erfindungsgemäßen Verfahren zur Herstellung von flächenhaft unterschiedlich vernetzten Formteilen zum Einsatz kommen, wie sie bereits erläutert wurden. Eine weitere Möglichkeit gemäß der Erfindung besteht darin, daß die Formteile zunächst einer chemischen Vernetzung und anschließend einer zusätzlichen Bestrahlungsvernetzung in den Bereichen der Einlagen ausgesetzt werden. Dieser weitere Arbeitsgang läßt sich jedoch vermeiden, wenn die Einlage entsprechend vorbehandelt ist. So empfiehlt sich hier eine Beschichtung, die mit ausreichend Vernetzungsbeschleunigern versehen ist. So werden zum Beispiel nach dem Verfahren mit Strahlenvernetzung die relevanten Bereiche höher vernetzt werden als der Rest des Formteiles. Die Beschichtung der Einlagen kann aus einer Kombination von Kleber, zum Beispiel PEAC, und einem Thermoplast bestehen. Der geeignete Zusatz von Vernetzungsbeschleunigern hängt vom geforderten Eigenschaftsprofil ab.

Bei der peroxidischen Vernetzung kann man die Einlage so beschichten, daß die Beschichtung mehr Peroxide erhält als der restliche Teil der Formteile. Hier gilt es, den entsprechenden Träger für das Peroxid zu wählen. Hierfür eignen sich ebenfalls PEAC oder eine Beschichtung aus Polyethylen. Bei der Bestrahlung mit energiereichen Elektronen wird, wie bereits angedeutet, die Reflexion der Elektronenstrahlung an Materialien wie Blei, Wolfram, Gold oder weitere Materialien mit höherer Ordnungszahl im Periodensystem ausgenutzt, wobei die relevanten Zonen des Formteils mit Platten oder Bändern aus diesen Materialien hinterlegt werden. Dabei ist Voraussetzung für das Funktionieren dieses Verfahrens, daß die Reichweite der benutzten

0147717

Elektronenstrahlung die Materialdicke des zu vernetzenden Produktes erheblich übertrifft. So ist beispielsweise für eine Polyethylenschicht von zwei bis drei Millimeter Stärke eine Elektronenstrahlung von 2 bis 2,5 MeV-Elektronen erforderlich.

Die Erfindung wird nun anhand von zwei Ausführungsbeispielen, die das Prinzip der Erfindung enthalten, näher erläutert.

Die Figur 1 zeigt ein flächenförmiges Formteil mit Einlagen entlang der Längsränder.

Figur 2 verdeutlicht die Erfindung anhand eines rohrförmigen Formteils in der Gestalt eines Schichtenmantelkabels.

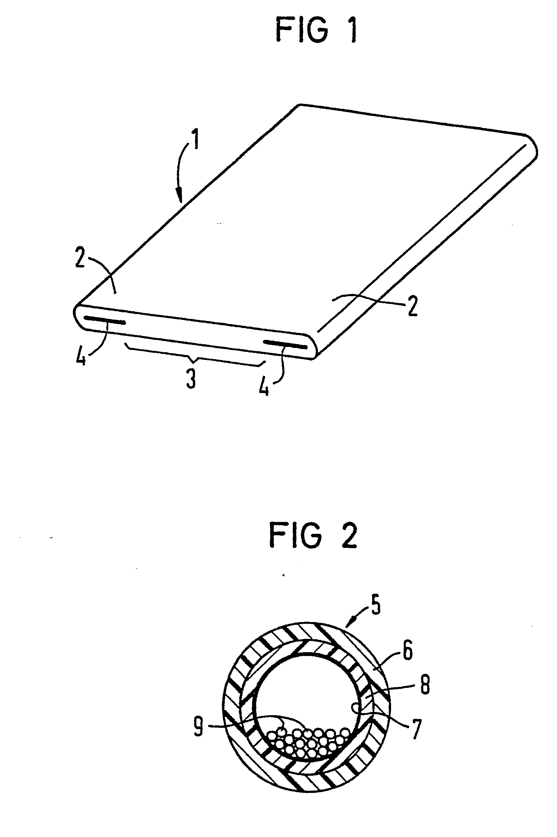

Die Figur 1 zeigt nun ein flächenförmiges Formteil 1, bei dem entlang der Längsränder, Stützbereiche 2, zum Beispiel versteifende Einlagen 4 aus einem geeigneten Material, zum Beispiel aus Metall oder einem reiß- und wärmefesten Kunststoff, eingebettet sind. Gemäß der Erfindung sind nun die Stützbereiche 2 im Bereich der Einlage 4 wesentlich stärker vernetzt als der Zwischenbereich 3 des Formteils 1. Derartige Formteile sind gebräuchlich für Schrumpfmanschetten, die um einen zu umhüllenden Gegenstand herumgewickelt und mit Hilfe von Kraftaufnahmeelementen, hier in Form von Verschlußelementen, die entlang der Stützbereiche 2 eingebracht sind, fixiert werden. Durch Behandlung mit Wärme schrumpft das Formteil 1 im Zwischenbereich 3 auf den umhüllten Gegenstand nieder und umhüllt ihn feuchtigkeitsdicht, wobei geeignete Dichtungsmittel, zum Beispiel in Form von Schmelzklebern als Beschichtung aufgebracht sind. Die Verschlußelemente, die hier nicht näher gezeigt sind, sind entlang der versteiften Stützbereiche 2 eingebracht, wobei diese mit den Schrumpfkräften beaufschlagt werden. Es ist deshalb von großer Bedeutung, daß diese Stützbereiche 2 so versteift sind, daß bei Wärmezufuhr keine Formveränderungen in diesen Bereichen stattfinden. Hierzu dienen zum Beispiel die Längseinlagen 4, welche besonders gut haftend in dem Material der Formteile 1 eingebettet werden müssen. Dies erfordert gemäß der Erfindung, eine Erhöhung des Vernetzungsgrades im Bereich der Einlagen 4 gegenüber dem Vernetzungsgrad im dehnungsfähigen Bereich 3 des Formteils 1. Die Art und Weise zur Herstellung des höheren Vernetzungsgrades gemäß der Erfindung ist bereits eingehend erläutert. Das in der Figur 1 abgebildete Formteil 1 wird schließlich nach der Vernetzung einer Reckung unterzogen, wobei der gering vernetzte Teil 3 geweitet wird und auf diese Weise sein Formgedächtnis erhält. Außerdem wird das Formteil in weiteren Verfahrensschritten zum Beispiel mit Löchern in den Stützbereichen 2 versehen, in welche schließlich die Verschlußelemente eingebracht werden.

Die Figur 2 zeigt als Formteil gemäß der Erfindung ein zylindrisches Ausführungsbeispiel in Form eines Schichtenmantelkabels 5, in dem ein rohrförmig gebogenes Metallband mit Kunststoffbeschichtung eingebracht ist. Gemäß der Erfindung wird nun zwischen der Kunststoffbeschichtung und dem Kunststoffmantel eine Vernetzung vorgenommen, durch die die Haftung zwischen den beiden Werkstoffen wesentlich erhöht wird. Dieser Schichtenmantel besteht aus einem über die Kabelseelenbewicklung 9 geformten, mit einer Beschichtung 8 aus PEAC versehenem Aluminiumband 7 und aus einem darüber extrudierten Kunststoffmantel 6. Bei der Herstellung des Schichtenmantelkabels wirkt das heiße, extrudierte Polyethylen auf die Beschichtung 8 aus PEAC des längs einlaufenden Aluminiumbandes 7 ein und bildet eine Klebeverbindung. Leider ist diese Verbindung bisher nicht immer optimal. Gemäß der Erfindung läßt sich diese Haftfähigkeit verbessern, da hier eine Beschichtung 8 gewählt wird, durch die der Klebeverbindung eine Vernetzungsverbindung (Vulkanisation) überlagert wird. Dies läßt sich zum Beispiel dadurch erreichen, daß die PEAC-beschichtete Folie vor dem Einlaufen durch ein Peroxidbad gezogen wird. Die Behandlung mit einer Peroxidpaste ist ebenfalls möglich. Während des Extrudiervorgangs springt dann aufgrund der Extrusionswärme das Peroxid an und erhöht die Bindungskräfte. Auf diese Weise ist auch hier das Prinzip gemäß der Erfindung erfüllt, nämlich die Haftfestigkeit zwischen einer Einlage, hier in Form eines beschichteten Aluminiumbandes, und dem darüber liegenden Kabelmantel 6 aus Kunststoff zu erhöhen.

29 Patentansprüche
2 Figuren

Patentansprüche

1. Formteil aus vernetztem Kunststoff mit Stützbereichen für Kraftaufnahmeelemente, d a d u r c h   g e k e n n - z e i c h n e t ,   daß die Stützbereiche (2, 8) einen höheren Vernetzungsgrad aufweisen als die übrigen vernetzten Bereiche (3, 6) des Formteils (1, 5).

2. Formteil nach Anspruch 1, insbesondere für wärmeschrumpfbare Kunststoffe mit Einlagen in den Stützbereichen, d a - d u r c h   g e k e n n z e i c h n e t ,   daß der Vernetzungsgrad des gesamten Kunststoffes im Bereich der Einlagen (4) höher ist als im einlagenfreien Bereich (3) des Formteils (1).

3. Formteil nach Anspruch 2, d a d u r c h   g e k e n n - z e i c h n e t ,   daß es als folienhaftes Flächenteil (1) mit längsverlaufenden Einlagen (4) in den Stützbereichen (2) ausgebildet ist.

4. Formteil nach einem der Ansprüche 2 oder 3, d a - d u r c h   g e k e n n z e i c h n e t ,   daß die Einlagen (4) mit einer Beschichtung aus einem Haftvermittler, vorzugsweise Polyethylenacrylcopolymerisat (PEAC), versehen sind.

5. Formteil nach Anspruch 4, d a d u r c h   g e - k e n n z e i c h n e t ,   daß die Beschichtung Vernetzungsbeschleuniger enthält.

6. Formteil nach einem der Ansprüche 4 oder 5, d a - d u r c h   g e k e n n z e i c h n e t ,   daß die Beschichtung aus einer Kombination von Kleber, vorzugsweise PEAC, und einem Thermoplasten besteht.

7. Formteil nach einem der Ansprüche 2 bis 6, d a - d u r c h gekennzeichnet , daß die Ein- lagen (4) aus Metall bestehen.

8. Formteil nach einem der Ansprüche 2 bis 6, d a - d u r c h gekennzeichnet , daß die Ein- lagen (4) aus reißfestem Kunststoff bestehen.

9. Formteil nach einem der Ansprüche 2 bis 6, d a - d u r c h gekennzeichnet , daß die Ein- lagen (4) aus Glasfaserelementen bestehen.

10. Formteil nach Anspruch 1, d a d u r c h g e - k e n n z e i c h n e t , daß der Vernetzungsgrad in den Stützbereichen (2) so groß gewählt ist, daß die Festigkeit für Kraftaufnahmeelemente gegeben ist.

11. Formteil nach einem der vorhergehenden Ansprüche, d a d u r c h g e k e n n z e i c h n e t , daß es als Manschette ausgebildet ist, in deren Stützbereiche (2) Verschlußelemente als Kraftaufnahmeelemente eingesetzt sind.

12. Formteil nach einem der Ansprüche 1 bis 10, d a - d u r c h g e k e n n z e i c h n e t , daß die Stütz- bereiche (2) als Verschlußelemente ausgebildet sind.

13. Formteil aus vernetztem Kunststoff mit Einlagen, d a d u r c h g e k e n n z e i c h n e t , daß bei rohrförmiger Ausgestaltung des Formteils (5) im Stützbereich (8) eine rohrförmige Einlage (7) vorgesehen ist und daß der Stützbereich (8) einen höheren Vernetzungsgrad aufweist als die übrigen Bereiche.

14. Formteil nach einem der vorhergehenden Ansprüche, d a d u r c h g e k e n n z e i c h n e t , daß eine

vernetzungsfördernde Schicht in den Stützbereichen (2, 8) eingebracht ist.

15. Formteil nach Anspruch 14, d a d u r c h   g e - k e n n z e i c h n e t , daß die vernetzungsfördernde Schicht zwischen der Einlage (4, 7) und dem vernetzten Kunststoff eingebracht ist.

16. Formteil nach einem der Ansprüche 14 oder 15, d a - d u r c h   g e k e n n z e i c h n e t , daß die vernet- zungsfördernde Schicht als Beschichtung der Einlage (4, 7) ausgebildet ist, bei der der Klebeverbindung eine Vernetzungsbindung überlagert ist.

17. Formteil nach Anspruch 16, d a d u r c h   g e - k e n n z e i c h n e t , daß die Beschichtung aus PEAC besteht, welches mit einem Peroxid vorbehandelt ist.

18. Verfahren zum Herstellen der Formteile nach einem der vorhergehenden Ansprüche, d a d u r c h   g e k e n n - z e i c h n e t , daß die Vernetzung durch energiereiche Bestrahlung erfolgt.

19. Verfahren nach Anspruch 18, d a d u r c h   g e - k e n n z e i c h n e t , daß der höhere Vernetzungsgrad durch Reflexion der Strahlung an geeigneten Materialien, wie zum Beispiel an Blei, Wolfram oder Gold erreicht wird.

20. Verfahren nach Anspruch 18, d a d u r c h   g e - k e n n z e i c h n e t , daß der höhere Vernetzungs- grad durch ungleichmäßige Ablenkung der Bestrahlung erreicht wird, und zwar so, daß die Bereiche mit höherem Ver- netzungsgrad länger bestrahlt werden.

**0147717**

21. Verfahren nach Anspruch 18, d a d u r c h  g e - k e n n z e i c h n e t ,  daß der höhere Vernetzungs- grad durch mehrfaches Bestrahlen erreicht wird.

22. Verfahren zur Herstellung der Formteile nach einem der Ansprüche 1 bis 17, d a d u r c h  g e k e n n - z e i c h n e t ,  daß die Vernetzung durch chemische Vernetzungsmittel, vorzugswseise durch Zugabe von Peroxiden erfolgt.

23. Verfahren nach Anspruch 22, d a d u r c h  g e - k e n n z e i c h n e t ,  daß die Vernetzung durch Eintauchen in ein Peroxidbad erfolgt.

24. Verfahren nach Anspruch 22, d a d u r c h  g e - k e n n z e i c h n e t ,  daß der höhere Vernetzungs- grad durch zusätzliche Zugabe von Vernetzungsmitteln, vorzugsweise von Peroxiden, in den relevanten Bereichen erfolgt.

25. Verfahren zur Herstellung von Formteilen nach einem der Ansprüche 22 bis 24, d a d u r c h  g e k e n n - z e i c h n e t ,  daß die Vernetzung durch die Wärme bei der Extrusion des Formteils (1, 5) angeregt wird.

26. Verfahren zur Herstellung von Formteilen nach einem der Ansprüche 1 bis 17, d a d u r c h  g e k e n n - z e i c h n e t ,  daß verschiedene Vernetzungsverfahren, insbesondere Bestrahlungsverfahren und chemische Verfahren, kombiniert eingesetzt werden.

27. Verfahren zur Herstellung von Formteilen nach einem der Ansprüche 1 bis 17, d a d u r c h  g e k e n n - z e i c h n e t ,  daß verschiedene Vernetzungsverfah- ren unabhängig voneinander eingesetzt werden.

28. Verfahren zur Herstellung von Formteilen nach einem der vorhergehenden Ansprüche, d a d u r c h   g e -k e n n z e i c h n e t ,   daß die Erhöhung des Vernetzungsgrades zu den Stützbereichen (2) kontinuierlich erfolgt.

29. Verfahren zur Herstellung von Formteilen nach einem der Ansprüche 1 bis 27, d a d u r c h   g e k e n n -z e i c h n e t ,   daß die Erhöhung des Vernetzungsgrades in Stufen erfolgt.

FIG 1

FIG 2